# EUROPEAN PATENT SPECIFICATION

(11) **EP 3 540 882 B1**
(45) Date of publication and mention of the grant of the patent: **25.11.2020**
(21) Application number: 18161833.1
(22) Date of filing: 14.03.2018
(51) Int. Cl.: H02B 13/035, H02B 13/045

(54) **COMPACT CIRCUIT BREAKER FOR A GAS INSULATED SWITCHGEAR**
KOMPAKTER SCHUTZSCHALTER FÜR GASISOLIERTE SCHALTANLAGE
DISJONCTEUR COMPACT POUR APPAREILLAGE DE COMMUTATION ISOLÉ ?AU GAZ

(43) Date of publication of application: 18.09.2019
(73) Proprietor: General Electric Technology GmbH, 5400 Baden (CH)
(72) Inventor: TREIER, Lukas, 5043 Holziken (CH)
(74) Representative: Brevalex

(56) References cited:
- EP-A1- 0 002 440
- EP-A2- 2 003 755
- WO-A1-2008/022893
- DE-A1- 19 649 613
- US-A- 4 967 307

## Description

### TECHNICAL DOMAIN

The invention concerns a compact circuit breaker for a gas insulated switchgear (GIS) in the medium and high voltage range.

More specifically, the invention concerns a circuit breaker housing for a gas insulated switchgear.

### STATE OF PRIOR ART

In a GIS (Gas Insulated Switchgear), the circuit breaker which is the major part of a bay is able to interrupt power between a busbar and a feeder. In most recent designs, the circuit breaker housing has a vertical orientation and has not more than three flanges for mounting switchgear devices (e.g. earthing switch, busbar, current or voltage transformer) in order to connect them by means of so-called common point conductors to the different connecting points of the interrupting chamber. A connection of three or more switchgear devices is called a common point. There is a growing market in the wind-energy field for 72,5 kV GIS. Complete modules have to be integrated into the tower. However, the space is limited because generally the inner diameter is approximately 6,0 m.

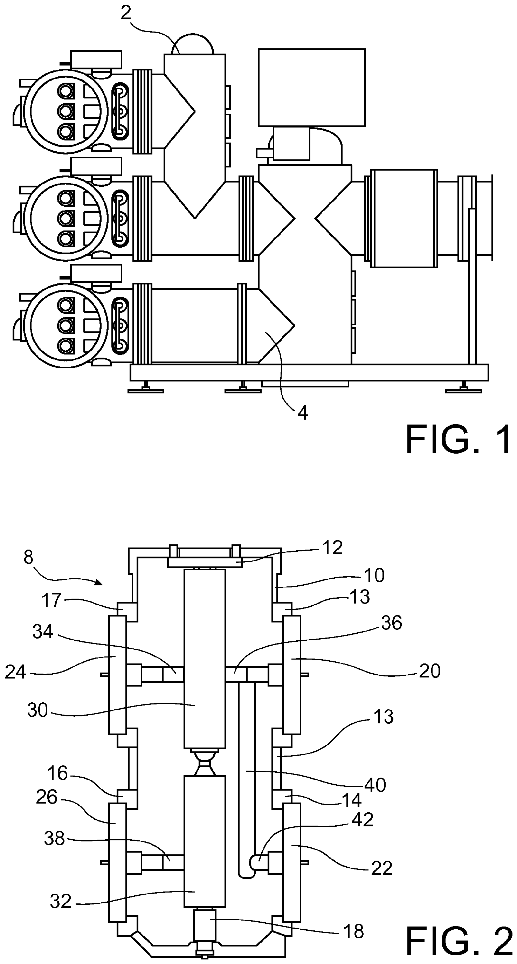

Moreover, as illustrated by figure 1 representing a typical configuration of current circuit breakers, an additional external housing 2 has to be assembled to the circuit breakers to connect three or more switchgear devices to an interrupting chamber 4.

A circuit breaker with the possibility to have one common point with three connections or even two common points with two connections, each in the same circuit breaker, would facilitate much more clever and cost effective module configurations. Such configurations. Existent circuit breaker designs do not allow for such configurations. Examples of such configurations can be found in EP 2 003 755 A2, DE 196 49 613 A1, WO 2008/022893 A1, FR 0 002 440 A1 or US 4 967 307.

To overcome the above drawbacks, the invention proposes a compact GIS-module for industry or windfarm applications which is cost effective, which reduces the weight and the amount of insulating gas.

### PRESENTATION OF THE INVENTION

To achieve this aim, the invention proposes a circuit breaker for a gas insulated switchgear (GIS) in the medium and high voltage range as defined in claim 1.

In a preferred embodiment of the invention, the circuit breaker housing comprises two pairs of identical flanges arranged radially opposite on each side of the housing.

In a preferred embodiment of the invention, at least a disconnector earthing switch, at least a proof earthing switch, at least a cable interface and at least a voltage transformer are directly assembled with the circuit breaker.

Advantageously, the circuit breaker according to the invention has an oval shaped housing with a slim interrupting chamber, new fixation supports for the interrupting chamber, and new connection points on two sides of the interrupting chamber.

### BRIEF DESCRIPTION OF THE FIGURE

Other features and advantages of the invention will appear from the following description taken as a non limiting example with reference to the following drawings in witch;
- figure 1 is a schematic representation of a circuit breaker according to the prior art;
- figure 2 represents a first embodiment of a circuit breaker according to the invention;
- figure 3 represents a third embodiment of a circuit breaker according to the invention;
- figure 4 represents an example of a circuit breaker according to the invention.

### DESCRIPTION OF A DETAILED ENBODIMENT OF THE INVENTION

In the remainder of this description, identical references will designate identical elements in the different embodiments of the invention.

Figure 2 illustrates a first embodiment of a circuit breaker 8 comprising a housing 10, a first insulating support 12 arranged on the top of the circuit breaker 8, a first flange 13, a second flange 14, a third flange 16, a fourth flange 17, a second insulating support 18 arranged on the bottom of the circuit breaker 8, a first and a second insulating plate 20, 22 arranged on one side of the housing 10 corresponding respectively to the first flange 13, and to second flange 14, and a third and fourth insulating plate 24, 26 arranged symmetrically on the other side of the housing 10 corresponding respectively to the third flange 16, and to fourth flange 17. The circuit breaker 8 further comprises, arranged inside the housing 10, a first interrupting chamber 30 with two electrical connection points 34, 36, and a second interrupting chamber 32 with one electrical connection point 38. The circuit breaker 8 further comprises one common point 40 connecting the first interrupting chamber 30 simultaneously to the electrical connection point 36 and to a fourth electrical connection point 42 that connects the first interrupting chamber 30 to another switchgear element as disconnector for example.

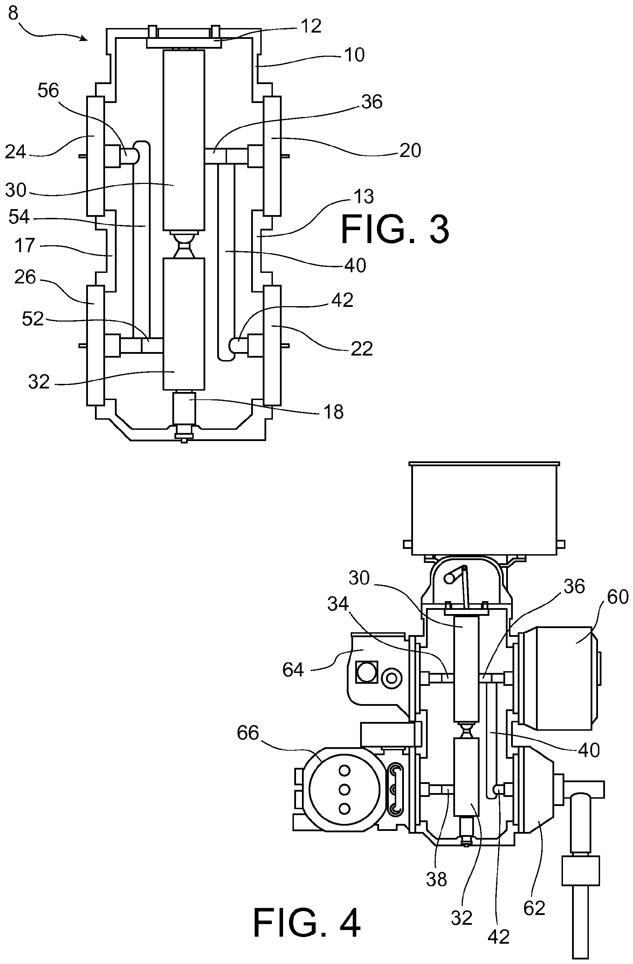

Figure 3 illustrates a second embodiment of a circuit breaker 8 comprising a housing 10, a first insulating support 12 arranged on the top of the circuit breaker 8, a first flange 13, a second flange 14, a third flange 16, a fourth flange 17, a second insulating support 18 arranged on the bottom of circuit breaker 8, a first and a second insulating plate 20, 22 arranged on one side of the housing 10, and a third and fourth insulating plate 24, 26 arranged symmetrically on the other side of the housing 10. The circuit breaker 8 further comprises, arranged inside the housing 10, a first interrupting chamber 30 with one electrical connection point 50, and a second interrupting chamber 32 with one electrical connection point 52. The circuit breaker 8 further comprises a first common point 40 connecting the first interrupting chamber 30 simultaneously to the electrical connection point 50 and to a fourth electrical connection point 42 that connects the first interrupting chamber 30 to another switchgear element as disconnector for example, and a second common point 54 connecting the second interrupting chamber 32 simultaneously to the electrical connection point 52 and to a fourth electrical connection point 56 that connects the second interrupting chamber 32 to another switchgear element as disconnector for example.

Figure 4 illustrates an embodiment of a circuit breaker 8 comprising a housing 10 enclosing a first interrupting chamber 30 with two electrical connection points 34, 36, and a second interrupting chamber 32 with one electrical connection point 38. The circuit breaker 8 further comprises one common point 40 connecting the first interrupting chamber 30 simultaneously to a voltage transformer 60 via the electrical connection point 36 and to a cable interface via the fourth electrical connection point 42. The first interrupting chamber 30 is further connected to an earth proof switch 64 via the electrical connection points 34. In this example, the second interrupting chamber 32 is connected to a disconnector earthing switch 66 via the electrical connection point 38.

As a consequence of the proposed configuration of the present invention, it is possible to have a common point connection for up to three flanges to the same connection point of the interrupting chamber, allowing new types of GIS-arrangements to be built. The footprint requirements of all devices directly assembled to the circuit breaker is relatively small which results in a compact lay-out.

This new possible GIS-modules are cost effective, have a lower footprint, reduced weight and reduced amount of insulating gas.

## Claims

1. Circuit breaker (8) for a gas insulated switchgear (GIS) in the medium and high voltage range, comprising a housing (10), at least four flanges (13, 14, 16, 17) for mounting switchgear devices, a first interrupting chamber (30) with a first electrical connection point (36) configured to connect the first interrupting chamber (30) to a first of said switchgear devices, a second interrupting chamber (32) with a second electrical connection point (38, 52) configured to connect the second interrupting chamber (32) to a second of said switchgear devices, **characterized in that** it comprises a common point conductor (40) connecting the first interrupting chamber (30) simultaneously to said first electrical connection point (36) and to a third electrical connection point (42), said third electrical connection point (42) being configured to connect via said common point conductor (40) the first interrupting chamber (30) to a third of said switchgear devices, and **in that** it comprises a fourth connection point (34, 56) configured to connect the first interrupting chamber (30) or the second interrupting chamber (32) to a fourth of said switchgear devices.

2. Circuit breaker (8) according to claim 1, wherein said first interrupting chamber (30) comprises said fourth connection points (34), allowing connection of the first interrupting chamber (30) to said fourth switchgear device.

3. Circuit breaker (8) according to claim 1, comprising a second common point conductor (54) connecting the second interrupting chamber (32) simultaneously to said second electrical connection point (52) and to said fourth electrical connection point (56), said fourth electrical connection point (56) being configured to connect via said second common point conductor (54) the second interrupting chamber (32) to said fourth switchgear device.

4. Circuit breaker (8) according to anyone of claims 1 to 3, wherein said flanges (13, 14, 16, 17) comprises a first pair of identical flanges (13, 14) and a second pair of identical flanges (16, 17), those two pairs being arranged radially opposite on each side of the housing (10).

5. Apparatus comprising a circuit breaker (8) according to anyone of claims 1 to 4 and at least four switchgear devices selected in a list comprising a voltage transformer (60), a cable interface (62), a proof earthing switch (64) and a disconnector earthing switch (66).

6. Apparatus according to claim 5, comprising a circuit breaker (8) according to claim 2, wherein said first switchgear device is a voltage transformer (60), said second switchgear device is a disconnector earthing switch (66), said third switchgear device is a cable interface (62) and said fourth switchgear device is a proof earthing switch (64).

## Patentansprüche

1. Leistungsschalter (8) für eine gasisolierte Schaltanlage (GIS) im Mittel- und Hochspannungsbereich, umfassend ein Gehäuse (10), mindestens vier Flansche (13, 14, 16, 17) zur Befestigung von Schaltanlagenvorrichtungen, eine erste Schaltkammer (30) mit einem ersten elektrischen Verbindungspunkt (36), der konfiguriert ist, um die erste Schaltkammer (30) mit einer ersten der Schaltanlagenvorrichtungen zu verbinden, eine zweite Schaltkammer (32) mit einem zweiten elektrischen Verbindungspunkt (38, 52), der konfiguriert ist, um die zweite Schaltkammer (32) mit einer zweiten der Schaltanlagenvorrichtungen zu verbinden, **dadurch gekennzeichnet, dass** er einen gemeinsamen Punktleiter (40) umfasst, der die erste Schaltkammer (30) gleichzeitig mit dem ersten elektrischen Verbindungspunkt (36) und mit einem dritten elektrischen Verbindungspunkt (42) verbindet, wobei der dritte elektrische Verbindungspunkt (42) so konfiguriert ist, dass er über den gemeinsamen Punktleiter (40) die erste Schaltkammer (30) mit einer dritten der Schaltanlagenvorrichtungen verbindet, und dass er einen vierten Verbindungspunkt (34, 56) umfasst, der so konfiguriert ist, dass er die erste Schaltkammer (30) oder die zweite Schaltkammer (32) mit einer vierten der Schaltanlagenvorrichtungen verbindet.

2. Leistungsschalter (8) nach Anspruch 1, wobei die erste Schaltkammer (30) die vierten Verbindungspunkte (34) umfasst, die eine Verbindung der ersten Schaltkammer (30) mit der vierten Schaltanlagenvorrichtung ermöglichen.

3. Leistungsschalter (8) nach Anspruch 1, umfassend einen zweiten gemeinsamen Punktleiter (54), der die zweite Schaltkammer (32) gleichzeitig mit dem zweiten elektrischen Verbindungspunkt (52) und mit dem vierten elektrischen Verbindungspunkt (56) verbindet, wobei der vierte elektrische Verbindungspunkt (56) so konfiguriert ist, dass er über den zweiten gemeinsamen Punktleiter (54) die zweite Schaltkammer (32) mit dem vierten Schaltanlagenvorrichtung verbindet.

4. Leistungsschalter (8) nach einem der Ansprüche 1 bis 3, wobei die Flansche (13, 14, 16, 17) ein erstes Paar identischer Flansche (13, 14) und ein zweites Paar identischer Flansche (16, 17) umfassen, wobei diese beiden Paare auf jeder Seite des Gehäuses (10) radial gegenüberliegend angeordnet sind.

5. Einrichtung, umfassend einen Leistungsschalter (8) nach einem der Ansprüche 1 bis 4 und mindestens vier Schaltanlagenvorrichtungen, die in einer Liste ausgewählt sind, die einen Spannungswandler (60), eine Kabelschnittstelle (62), einen einschaltfesten Erdungsschalter (64) und einen Trenn-Erdungsschalter (66) umfasst.

6. Einrichtung nach Anspruch 5, umfassend einen Leistungsschalter (8) nach Anspruch 2, wobei die erste Schaltanlagenvorrichtung ein Spannungswandler (60) ist, die zweite Schaltanlagenvorrichtung ein Trenn-Erdungsschalter (66) ist, die dritte Schaltanlagenvorrichtung eine Kabelschnittstelle (62) ist und die vierte Schaltanlagenvorrichtung ein einschaltfester Erdungsschalter (64) ist.

## Revendications

1. Disjoncteur (8) pour un appareillage de commutation à isolation gazeuse (GIS) dans la gamme moyenne et haute tension, comprenant un boîtier (10), au moins quatre brides (13, 14, 16, 17) pour le montage de dispositifs d'appareillage, une première chambre de coupure (30) avec un premier point de connexion électrique (36) configuré pour connecter la première chambre de coupure (30) à un premier desdits dispositifs d'appareillage, une deuxième chambre de coupure (32) avec un deuxième point de connexion électrique (38, 52) configuré pour connecter la deuxième chambre de coupure (32) à un deuxième desdits dispositifs d'appareillage, **caractérisé en ce qu'**il comprend un conducteur de point commun (40) connectant la première chambre de coupure (30) simultanément audit premier point de connexion électrique (36) et à un troisième point de connexion électrique (42), ledit troisième point de connexion électrique (42) étant configuré pour connecter par l'intermédiaire dudit conducteur de point commun (40) la première chambre de coupure (30) à un troisième desdits dispositifs d'appareillage, et **en ce qu'**il comprend un quatrième point de connexion (34, 56) configuré pour connecter la première chambre de coupure (30) ou la deuxième chambre de coupure (32) à un quatrième desdits dispositifs d'appareillage.

2. Disjoncteur (8) selon la revendication 1, dans lequel ladite première chambre de coupure (30) comprend ledit quatrième point de connexion (34), permettant la connexion de la première chambre de coupure (30) audit quatrième dispositif d'appareillage.

3. Disjoncteur (8) selon la revendication 1, comprenant un deuxième conducteur de point commun (54) connectant la deuxième chambre de coupure (32) simultanément audit deuxième point de connexion électrique (52) et audit quatrième point de connexion électrique (56), ledit quatrième le point de connexion électrique (56) étant configuré pour connecter par l'intermédiaire dudit deuxième conducteur de point commun (54) la deuxième chambre de coupure (32) audit quatrième dispositif d'appareillage.

4. Disjoncteur (8) selon l'une quelconque des revendications 1 à 3, dans lequel lesdites brides (13, 14, 16, 17) comprennent une première paire de brides identiques (13, 14) et une deuxième paire de brides identiques (16, 17), ces deux paires étant disposées radialement opposées de part et d'autre du boîtier (10).

5. Appareil comprenant un disjoncteur (8) selon l'une quelconque des revendications 1 à 4 et au moins quatre dispositifs d'appareillage sélectionnés dans une liste comprenant un transformateur de tension (60), une interface de câble (62), un commutateur de mise à la terre (64) et un sectionneur de mise à la terre (66).

6. Appareil selon la revendication 5, comprenant un disjoncteur (8) selon la revendication 2, dans lequel ledit premier dispositif d'appareillage est un transformateur de tension (60), ledit deuxième dispositif d'appareillage est un sectionneur de mise à la terre (66), ledit troisième dispositif d'appareillage est une interface de câble (62) et ledit quatrième dispositif d'appareillage est un commutateur de mise à la terre (64).
